# EUROPEAN PATENT SPECIFICATION

(11) **EP 1 871 694 B1**
(45) Date of publication and mention of the grant of the patent: **15.06.2011**
(21) Application number: 06732995.3
(22) Date of filing: 11.04.2006
(51) Int. Cl.: B65G 15/60, B65G 39/10

(54) **CONVEYOR BELT**
FÖRDERBAND
COURROIE DE TRANSPORT

(30) Priority: 11.04.2005 NL 1028734
(43) Date of publication of application: 02.01.2008
(73) Proprietor: Totaal Techniek Frans van Zaal B.V., 1424 PX De Kwakel (NL)
(72) Inventor: VAN ZAAL, Franciscus, Johannes, Maria, NL-1428 RW Vrouwenakker (NL); KOK, Johannes, Adrianus, NL-3645 DE Vinkeveen (NL)
(74) Representative: Hatzmann, Martin
(86) International application number: PCT/NL2006/000188
(87) International publication number: WO 2006/110030

(56) References cited:
- EP-A- 1 518 802
- DE-U1- 29 908 943
- US-A- 2 542 885
- PATENT ABSTRACTS OF JAPAN vol. 013, no. 177 (M-818), 26 April 1989 (1989-04-26) & JP 01 008118 A (BRIDGESTONE CORP), 12 January 1989 (1989-01-12)

## Description

The invention relates to a conveying apparatus according to the preamble of claim 1.

Such an apparatus is well known as a conveying apparatus.

Examples of conveyor apparatuses are described in publications US2542885 and DE29908943 U1. US2542885 regards a portable and adjustable conveyor of which the lifting mechanism is adapted for conveniently unloading materials. DE 299 08 943 U1 discloses a conveying apparatus comprising a pair of conveying ropes supported by rollers having two outer parts and a central part of reduced diameter, wherein the conveying ropes have a trapezoid cross-section and the conveying ropes are only supported on their sides by the two outer parts of the rollers.

EP1518802 concerns a device for taking up, conveying and depositing plant carriers.

For the conveyance of objects, it has been found that the transition of the rollers can cause a problem because bumping or colliding can occur therein due to the weight of the object to be conveyed. In particular, with the known apparatus, the belt is preferably supported so as to be level over its whole width. This results in a high point load and results in bumping which is at least disturbing or noisy, and which causes wear of the belt so that its lifespan is considerably shortened. It is an object of the invention to provide a conveying apparatus where such drawbacks do not occur or occur less.

This is achieved by the conveying apparatus of claim 1. In particular, because the rollers are designed with a central reduction, the belt is only supported on the sides. Thus, the object is suspendedly supported substantially from the sides of the belt. Here, the stiffness and shape of the belt, the shape of the reduction and the shape and weight of the object to be conveyed can be geared to one another. Thus, disturbing vibrations and bumps can be reduced.

The object of the invention is also achieved by the conveyor of claim 5.

The invention will be explained in more detail with reference to the Figures, in which:
Fig. 1 shows a front view of a conveying apparatus according to the invention;
Fig. 2 shows a side elevational view of the conveying apparatus according to Figure 1; and
Fig. 3 shows an overall view of the conveying apparatus according to the preceding Figures.

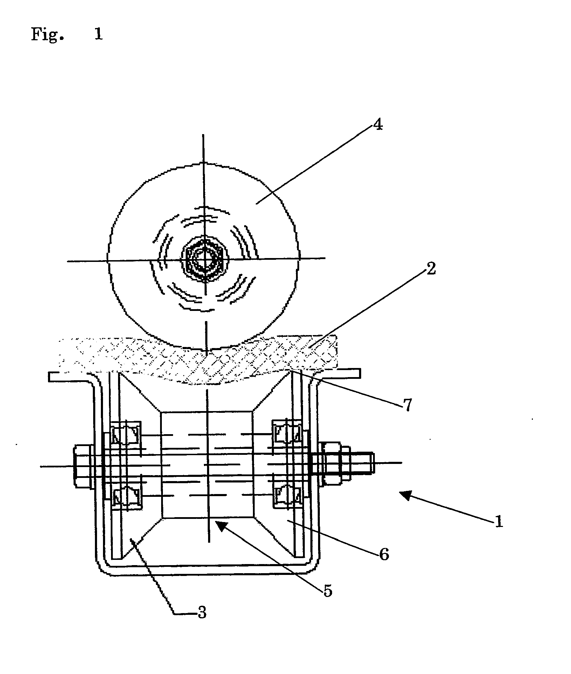

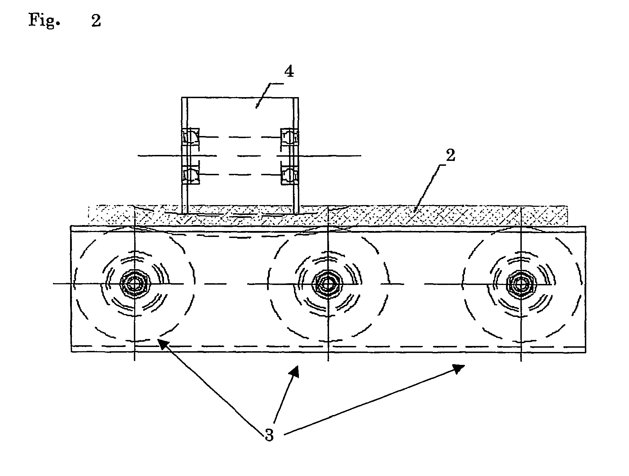

In the Figures, same parts are designated by same reference numerals. In Fig. 1, a conveying apparatus 1 according to the invention is shown. Fig. 2 shows the apparatus of Fig. 1 in a side elevational view.

The conveying apparatus 1 comprises an endless belt 2 which is moved by means of rollers 3. On the belt 2, an object 4 can be placed and conveyed. As can be seen in Fig. 1, the roller 3 is designed with a central reduction 5 having a smaller outer diameter than the outer parts 6. Thus, the belt 2 is only supported by the outer parts 6 on the sides 7. Thus, the object 4 is suspendedly supported substantially from the sides 7 of the belt 2.

Fig. 1 further shows that the reduction 5 is designed with a central cylindrical part. The side parts 6 contiguous thereto are conical. In order to be able to suspendedly support the object, the shape of the reduction 5 and the stiffness of the belt 2 need to be geared to each other. Further, the belts 2 are preferably from a thick, rubberlike material of approx. 1-2 cm, manufactured for further absorbing shocks during the transition of an object 4 over a roller 3. In the embodiment shown, the belt 2 is approx. 10 cm wide for supporting an object 4 having a diameter of approx. 7 cm. Here, the rollers 3 are arranged at a distance of approx. 10-15 cm with respect to one another.

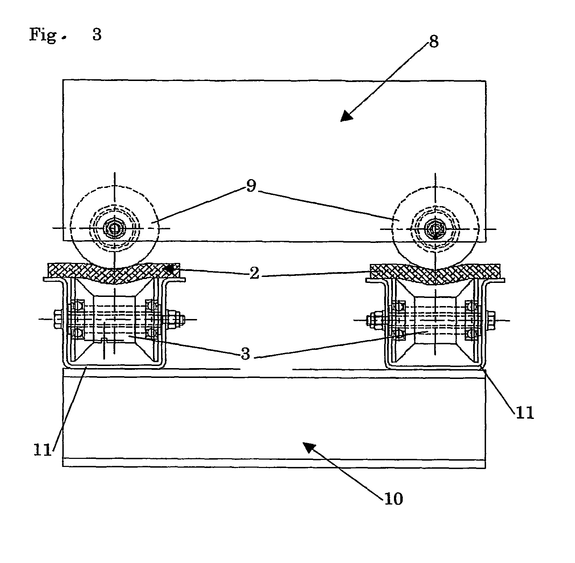

Fig. 3 further shows the setup as it is preferably used by the invention for conveying a cultivation tray 8 or cultivation trough. These are elongated trays which are used for crop cultivation in, for instance, greenhouses. For conveying such a tray, two conveyor belts 2 set up parallel to each other are provided for each supporting a wheel 9 of the tray 8. The conveyor belts 2 can be set up separately or can be connected via a central frame 10. The rollers 3 are mounted in a U-shaped profile 11 which runs via the longitudinal direction of the conveyor belt 2. As is shown, the belt 2 is dimensioned for suspendedly supporting a wheel 9 of the tray 8.

Such a system is used for conveying an amount of elongated trays 8 for cultivating crops in, for instance, a greenhouse. As shown, the trays comprise wheels placed in the cross direction of the tray; alternatively, only one wheel may be present and a support element without a wheel.

For use of this system, an amount of cultivation lines may be set up in the greenhouse. Such cultivation troughs generally comprise guide elements for taking up the trays and a loading station set up at the conveyor belt. Further, lifting means may be provided for loading the trays from and onto the conveyor belt.

Although the invention is set forth on the basis of a preferred embodiment, it is not limited thereto. Thus, different elements may also be conveyed using the belt, for instance cylindrical elements, or also differently shaped elongated elements, for instance beam-shaped elements. Such objects, provided that their shapes are geared to the reduction of the guide rollers, may also be transported very well without bumping and with little noise with the aid of the conveying apparatus according to the invention. The scope of the invention is defined by the following claims.

## Claims

1. A conveying apparatus (1) comprising an endless belt (2) having a first surface for carrying an object and a second surface opposite to said object carrying surface, a plurality of rollers (3) having two outer parts (6) and a central part (5), said central parts (5) having a smaller diameter than said outer parts (6), wherein said endless belt (2) is moved over said rollers (3) by means of a drive and on which an object can be placed and conveyed, **characterised in that** the stiffness and shape of said endless belt (2) and the shape of said central part (5) are such that said second surface of said endless belt (2) is only supported on its sides (7) by said outer parts (6) and that the conveyed object is suspendedly supported substantially from said sides (7) of said endless belt (2).

2. A conveying apparatus according to claim 1, **characterized in that** the central part (5) is a central cylindrical part and, on the sides (7), the outer parts (6) are conical parts contiguous thereto, wherein the shape of the central part (5), the stiffness of the belt (2), and the weight of the object (4) to be supported are geared to one another so that the object (4) is centrally fixed on the belt (2).

3. A conveying apparatus according to claim 1 or 2, **characterized in that** two conveyor belts (2) set up parallel next to each other are provided for each supporting a wheel (9) or other support means of a conveying tray (8) to be conveyed by the apparatus, wherein the respective belts (2) have a dimensioning for suspendedly supporting such a wheel (9).

4. A conveying apparatus according to any one of the preceding claims, wherein the belts (2) are manufactured from a thick rubberlike material.

5. A conveyor comprising:
- a conveying apparatus (1) according to at least one of the preceding claims;
- an amount of elongated trays (8) for cultivating crop, the trays (8) comprising wheels (9) placed at least on one side in the cross direction of the tray (8);
- an amount of cultivation lines set up in a cultivation space, comprising guide elements for taking up the trays (8), each of the cultivation lines at least comprising a loading station set up at the conveying apparatus (1); and
- means for loadin and unloading the trays (8) between the loading stations and the conveying apparatus (1).

## Patentansprüche

1. Eine Fördervorrichtung (1) aufweisend ein Endlosband (2), das eine erste Fläche zum Fördern eines Objektes und eine zweite Fläche gegenüber der objektfördernden Fläche aufweist, eine Vielzahl von Rollen (3), die jeweils zwei äußere Teile (6) und ein mittleres Teil (5) aufweisen, wobei die mittleren Teile (5) einen kleineren Durchmesser aufweisen als die äußeren Teile (6), wobei das Endlosband (2) über die Rollen (3) mittels eines Antriebs bewegt wird und auf dem ein Objekt platzierbar und förderbar ist, **dadurch gekennzeichnet, dass** die Steifigkeit und Form des Endlosbandes (2) und die Form des mittleren Teils (5) so ausgebildet sind, dass die zweite Fläche des Endlosbandes (2) nur an ihren Seiten (7) durch die äußeren Teile (6) getragen wird, und dass das beförderte Objekt im Wesentlichen durch die Seiten (7) des Endlosbandes (2) hängend getragen wird.

2. Fördervorrichtung nach Anspruch 1, **dadurch gekennzeichnet, dass** das mittlere Teil (5) ein mittleres zylindrisches Teil ist und die äußeren Teile (6) an den Seiten (7) konische dazu angrenzende Teile sind, wobei die Form des mittleren Teils (5), die Steifigkeit des Bandes (2) und das Gewicht des zu tragenden Objektes (4) aufeinander abgestimmt sind, so dass das Objekt (4) mittig auf dem Band (2) befestigt wird.

3. Fördervorrichtung nach Anspruch 1 oder 2, **dadurch gekennzeichnet, dass** zwei Förderbänder (2) bereitgestellt werden, die parallel zueinander angeordnet sind, um jeweils ein tragendes Rad (9) oder andere tragende Mittel einer Förderablage (8) zu tragen, die durch die Vorrichtung zu fördern ist, wobei die jeweiligen Bänder (2) eine Dimensionierung zum hängenden Tragen eines solchen Rades (9) aufweisen.

4. Fördervorrichtung nach einem der vorstehenden Ansprüche, wobei die Bänder (2) aus einem dicken gummiartigen Material hergestellt sind.

5. Förderer aufweisend:
- eine Fördervorrichtung (1) nach mindestens einem der vorstehenden Ansprüche;
- eine Anzahl von verlängerten Ablagen (8) zum Kultivieren von Pflanzen, wobei die Ablagen (8) Räder (9) aufweisen, die mindestens auf einer Seite in Querrichtung der Ablage (8) angeordnet sind;
- eine Anzahl von in einem Kultivierungsraum angeordneten Kultivierungslinien, die Führungselemente zum Aufnehmen der Ablagen (8) aufweisen, wobei jede der Kultivierungslinien mindestens eine an der Fördervorrichtung (1) angeordnete Ladestation aufweist; und
- Mittel zum Laden und Entladen der Ablagen (8) zwischen den Ladestationen und der Fördervorrichtung (1).

## Revendications

1. Dispositif de transport (1) comprenant une bande sans fin (2) présentant une première surface de transport d'un objet et une seconde surface opposée à ladite surface de transport d'objet, une pluralité de galets (3) présentant deux parties externes (6) et une partie centrale (5), lesdites parties centrales (5) présentant un diamètre inférieur à celui desdites parties externes (6), ladite bande sans fin (2) étant déplacée sur lesdits galets (3) au moyen d'un dispositif d'entraînement et un objet pouvant être placé et transporté sur celle-ci, **caractérisé en ce que** la rigidité et la forme de ladite bande sans fin (2) et la forme de ladite partie centrale (5) sont telles que ladite seconde surface de ladite bande sans fin (2) n'est soutenue que sur ses côtés (7) par lesdites parties externes (6) et **en ce que** l'objet transporté est supporté en suspension sensiblement depuis lesdits côtés (7) de ladite bande sans fin (2).

2. Dispositif de transport selon la revendication 1, **caractérisé en ce que** la partie centrale (5) est une partie centrale cylindrique et, sur les côtés (7), les parties externes (6) sont des parties coniques contiguës à celle-ci, la forme de la partie centrale (5), la rigidité de la bande (2) et le poids de l'objet (4) à supporter étant adaptés l'un par rapport à l'autre de manière à ce que l'objet (4) soit immobilisé centralement sur la bande (2).

3. Dispositif de transport selon la revendication 1 ou la revendication 2, **caractérisé en ce que** les deux bandes transporteuses (2) juxtaposées parallèlement entre elles sont prévues pour supporter chacune une roue (9) ou un autre moyen d'appui d'un plateau de transport (8) destiné à être transporté par le dispositif, les bandes (2) respectives étant dimensionnées pour supporter en suspension une telle roue (9).

4. Dispositif de transport selon l'une quelconque des revendications précédentes, les bandes (2) étant en matériau caoutchouteux épais.

5. Transporteur comprenant :
- un dispositif de transport (1) selon l'une au moins des revendications précédentes ;
- une quantité de plateaux de culture allongés (8), les plateaux (8) comprenant des roues (9) placées au moins d'un côté dans la direction transversale du plateau (8) ;
- une quantité de lignes de culture mises en place dans un espace de culture, comprenant des éléments de guidage pour le positionnement des plateaux (8), chacune des lignes de culture comprenant au moins une station de chargement mise en place au niveau du dispositif de transport (1) ; et
- des moyens de chargement et de déchargement des plateaux (8) entre les stations de chargement et le dispositif de transport (1).
